# EUROPÄISCHE PATENTSCHRIFT

(11) **EP 3 052 296 B1**
(45) Veröffentlichungstag und Bekanntmachung des Hinweises auf die Patenterteilung: **17.02.2021**
(21) Anmeldenummer: 14799953.6
(22) Anmeldetag: 29.09.2014
(51) Int. Cl.: B29C 48/69, B29C 48/27, B01D 29/64

(54) **FILTERVORRICHTUNG**
FILTER DEVICE
DISPOSITIF DE FILTRATION

(30) Priorität: 04.10.2013 AT 506442013
(43) Veröffentlichungstag der Anmeldung: 10.08.2016
(73) Patentinhaber: EREMA Engineering Recycling Maschinen und Anlagen Gesellschaft m.b.H., 4052 Ansfelden (AT)
(72) Erfinder: ARBEITHUBER, Josef, A-4052 Ansfelden (AT); PAULI, Peter, A-4052 Ansfelden (AT); FEICHTINGER, Klaus, A-4052 Ansfelden (AT)
(74) Vertreter: Wildhack & Jellinek
(86) Internationale Anmeldenummer: PCT/AT2014/050224
(87) Internationale Veröffentlichungsnummer: WO 2015/048832

(56) Entgegenhaltungen:
- EP-A1- 1 038 659
- EP-A2- 0 312 354
- AT-B- 294 654
- AT-B- 413 497
- CH-A- 347 637
- DE-U1-202011 105 998
- JP-A- 2012 081 424
- US-A- 3 997 441

## Beschreibung

Die Erfindung betrifft eine Filtervorrichtung gemäß dem Oberbegriff des Anspruchs 1. Aus der DE 202011105998 U1 und der EP 0925904 A1 sind Schaberelemente zum Abschaben von Fremdstoffanteilen von Sieben für Kunststoffschmelzen bekannt. Dabei zeigt die DE 202011105998 U1 ein Schaberelement, das einen Anstellwinkel von 56° bei einem negativen Spanwinkel besitzt. Aus derselben Druckschrift sind auch Schaberelemente mit einem Anstellwinkel von 25° bekannt, die einen positiven Spanwinkel besitzen. Aus der AT 413497 B ist eine Filtervorrichtung der eingangs genannten Art bekannt.

Kunststoffschmelzen, die aus gesammelten Sekundärrohstoffen stammen weisen einen erhöhten Fremdstoffanteil (Holz, Papier, Aluminium, Fremdkunststoffe, Gummi, Elastomere usw.) auf. Um eine entsprechende Qualität des Regranulats zu erzeugen, muss dieser Fremdanteil so gut wie möglich aus der Schmelze entfernt werden. Dazu werden unterschiedliche Methoden bzw. Filter verwendet, wie z.B. Kolbenfilter, Scheibenfilter, kontinuierliche Filter oder diskontinuierliche Filter. Unter anderem werden Filtersysteme verwendet, bei denen sich Schaberelemente über ein metallisches Filtersieb bewegen, das üblicherweise eine glatte Oberfläche hat und Sieblöcher aufweist, die einen Durchmesser haben, der sich in einem Bereich von einigen µm bis zu einigen mm bewegt. Aufgabe der Schaberelemente ist es, zurückgehaltene Verschmutzungen abzuheben und einer Austragsvorrichtung zuführen. Neben dieser Grundfunktionalität ist die Einsatzdauer der Filtersiebe und die Wiederverwendbarkeit der Filtersiebe von besonderer wirtschaftlicher Bedeutung. Solche Filtersysteme sollten über mehrere Tage, Wochen, wenn möglich Monate im Einsatz bleiben, wobei Durchsätze von 100 Tonnen bis tausenden Tonnen gefahren werden sollten. Dabei sollen diese Filtersysteme Verschmutzungen im Prozentbereich aus der Schmelze auszutragen.

Zu diesem Zwecke ist der Verschleiß der Gleitpartner Filtersieb und Schaberelement von Bedeutung. Weiters ist es wesentlich, dass das Schaberelement die Verschmutzung abhebt und nicht am Filtersieb vor sich her fördert oder gar in die Sieblöcher stopft. Zu diesem Zwecke ist die besondere Gestaltung der Schaberelemente von Bedeutung.

Aufgabe der Erfindung ist es, eine Filtervorrichtung zu erstellen, die langlebig und einfach aufgebaut ist und insbesondere Verschmutzungen effizient von der Oberfläche des Filtersiebes beseitigt und ableitet.

Diese Ziele werden bei einer Filtervorrichtung der eingangs genannten Art mit den im Kennzeichen des Anspruches 1 angeführten Merkmalen erreicht. Erfindungsgemäß ist somit vorgesehen, dass das Schaberelement einen negativen Spanwinkel besitzt und in einem Anstellwinkel von 10 bis 45°, insbesondere 20 bis 35°, zur Oberfläche des Filtersiebes geneigt angeordnet ist. Ist das Schaberelement zu steil gegenüber der Oberfläche des Filtersiebes angestellt, so wird die Spitze abgetragen bzw. wird wirkungslos und das Schaberelement kann sich auf der Oberfläche des Filtersiebes verhaken, was zu einer Zerstörung des Filtersiebes führen kann.

Des Weiteren werden die Menge und die Geschwindigkeit der abgehobenen Verunreinigungen vom Anstellwinkel beeinflusst. Der angegebene Winkelbereich optimiert das Abheben und die Abfuhr der Verunreinigungen. Die erfindungsgemäße Filtervorrichtung verhindert, dass Verunreinigungen immer wieder längs der Oberfläche des Filtersiebes entlang geführt werden und es zu einem Verreiben des Schmutzes kommt.

Es ist ferner vorgesehen, dass an der siebnahen Fläche des Endbereiches des Schaberelements an die Rundung eine Anlagefläche anschließt, deren Erstreckung senkrecht zum Längsverlauf der Schabkante dem 5- bis 100-fachen, vorzugsweise dem 10- bis 50-fachen, des maximalen Durchmessers bzw. der maximalen Öffnungsweite der Sieblöcher entspricht.

Die spezielle Ausbildung der Rundung der Schabkante trägt zur Langlebigkeit und effizienten Beseitigung von Verschmutzungen bei. Mit dieser Rundung hebt das Schaberelement die Verschmutzungen von den Sieblöchern, die beispielsweise einen Durchmesser von 100 bis 200 µm besitzen können, mit seiner Schabkante effizient ab, weil der Radius der Schabkante kleiner ist als die Dimension der Sieblöcher. Ist dieser Radius zu groß werden Verunreinigung vor dem Schaberelement hergeschoben und in die Sieböffnungen gestopft und es kommt zur Verstopfung der Sieblöcher, was einen Ausfall der Filtervorrichtung zur Folge hat oder zu einem Durchdrücken der Verschmutzungen führt, womit ein erhöhter Verschmutzungsgrad im Regranulat eintritt und zu einer minderwertigen Qualität des Endproduktes führt.

Dieser Radius bzw. der Endbereich des Abschnittes des Schabelementes, der eine derartige Rundung besitzt, soll während der Einsatzdauer weitgehend unverändert erhalten bleiben. Dies unter der Voraussetzung dass neben den Reibpartnern Filtersieb und Schaberelement auch noch abrasive Stoffe wie Metalle, Papier, Sand, Füllstoffe usw. als Reibpartner vorhanden sind und die Beseitigung der Verschmutzungen beeinflussen bzw. das Schaberelement abarbeiten. Ist der Radius der Schabkante zu groß, werden Verunreinigungen vor der Schabkante hergeschoben. Das ist insbesondere dann kritisch, wenn die Dimensionen der Verunreinigungen in der Größe der Sieblöcher liegen. In diesem Fall wird jede Verunreinigung mehrfach in die Sieblöcher gedrückt und wieder herausgezogen, was in weiter Folge zu erhöhtem Verschleiß an den Filtersieben und Schaberelementen führt und deren Einsatzdauer verkürzt. Steht der Schaber zu steil zum Filtersieb, kann es rasch zu einer unerwünschten Verrundung oder Abarbeitung der Schabkante kommen und sofern keine Nachschärfung erfolgt, wird die Filtervorrichtung versagen.

An der siebnahen Fläche des Endbereiches des Schaberelements schließt an die Rundung eine Anlagefläche an, deren Erstreckung senkrecht zum Längsverlauf der Schabkante dem 5- bis 100-fachen, vorzugsweise dem 10- bis 50-fachen, des maximalen Durchmessers bzw. der maximalen Öffnungsweite der Sieblöcher entspricht. Die Erstreckung der Anlagefläche bzw. deren Dimension parallel zur Bewegungsrichtung des Schaberelementes sollte nicht zu lang und auch nicht zu kurz sein, sodass die Rundung der Schabkante aufgrund der Materialabtragung durch die Polymerschmelze und deren Verunreinigungen während des Betriebes durch Nachschärfung erhalten bleibt.

Die Länge bzw. die Dimensionen der Anlagefläche in Bewegungsrichtung und/oder der Anstellwinkel sind somit von Bedeutung, um das Passieren von Verunreinigungen durch das Filtersieb möglichst zu minimieren. Sofern diese beiden Parameter nicht in der erforderlichen Weise abgestimmt sind, wird unerwünschter Druck auf die Sieblöcher ausgeübt und Verunreinigungen werden in die Sieblöcher gestopft.

Auch der Spitzenwinkel am siebnahen Ende des Schaberelementes ist von Bedeutung und unterstützt die Wirkung des Anstellwinkels. Erfindungsgemäß ist vorgesehen, dass das Schaberelement in seinem siebnahen Endbereich einen in der Schabkante endenden sich verjüngenden und gegebenenfalls die Rundung tragenden Abschnitt besitzt, wobei der Spitzenwinkel zwischen der diesen Abschnitt begrenzenden, siebnahen Rückenfläche und siebfernen Vorderfläche 1 bis 60°, vorzugsweise 5 bis 30°, insbesondere 10 bis 25°, beträgt.

Die Einstellung derartiger Parameter ist auch von Bedeutung, um ein Aufschwimmen bzw. Abheben des Schaberelementes bei bestimmten Arten von Verschmutzungen, wie z.B. Aluminiumfolien, zu verhindern. Auch Sandverschmutzungen führen zu einem Aufschwimmen und das Schaberelement kann dann seine Aufgabe nicht mehr erfüllen.

Zur effizienten Abfuhr von von der Oberfläche des Filters abgehobenen bzw. abgetragenen Verschmutzungen ist es von Vorteil, wenn die siebferne Vorderfläche des Schaberelements ausgehend von der Schabkante knickfrei zum siebfernen Ende des Schaberelements hin verläuft. Ein knickfreier Übergang des sich verjüngenden Abschnittes in die siebferne Wandfläche des Schaberelementes hat den Vorteil, dass abgehobene Verschmutzungen nicht über eine Kante laufen müssen, die sich als ein Störfaktor beim Ableiten und Austragen der Verschmutzungen, insbesondere durch Verwirbelungen, erweisen kann.

Ein konstruktiv einfacher Aufbau des Schaberelementes sieht vor, dass die Dicke des plattenförmigen Schaberelements 0,5 bis 30 mm, vorzugsweise 1 bis 15 mm, insbesondere 2 bis 8 mm, beträgt, und/oder dass die Länge des Schaberelementes das 5- bis 50-fache, vorzugsweise das 8- bis 30-fache, der Dicke des Schaberelementes beträgt. Das Schaberelement ist vorteilhafterweise plattenförmig mit langgestrecktem, vorzugsweise rechteckförmigem, Querschnitt ausgebildet, an dessen einer kurzen Seite der sich verjüngender Abschnitt anschließt bzw. ausgebildet ist, der letztlich einen Spitzenwinkel ausbildet, der in die Schabkante ausläuft, die gegebenenfalls die Rundung aufweist.

Der vorgesehene Spitzenwinkel bewirkt, dass bei einer Abarbeitung der Schabkante durch abrasive Stoffe der Endbereich des verjüngten Abschnittes nur langsam in seiner Dicke mit zunehmender Entfernung von der Oberfläche des Filtersiebes zunimmt und trotz mechanischem Abtrag, ausgelöst durch abrasive Stoffe, der Radius der Rundung der Schabkante weitgehend erhalten bleibt und zumindest die sich in Bewegungsrichtung erstreckende Ausdehnung und die Länge des Kreisbogens der Rundung nur langsam abnimmt. Aus diesem Grund ist es auch vorteilhaft, wenn die Dicke des plattenförmigen Schabelementes gering gehalten wird und lediglich durch die erforderliche mechanische Festigkeit bestimmt wird, da der sich verjüngende Abschnitt dann einfacher auszubilden ist. Die Abarbeitung der Spitze des Schaberelements hängt somit wesentlich vom Anstellwinkel und in einem bestimmten Ausmaß auch vom Spitzenwinkel ab.

Die Dicke des Schaberelementes ist auch von Bedeutung für die Anpassung des Schaberelementes an die Oberfläche des Filtersiebes. Dicke Schaberelemente können nicht ohne weiteres an wellige Filtersiebe angepasst werden; relativ dünn gehaltene Schaberelemente können auch gewellten Sieben folgen. Des Weiteren können sich dünne Schaberelemente auch in die Richtung ihrer Querachse und um die Schabkante herum verwinden.

In der Praxis ist es ohne weiteres möglich, dass die Anlagefläche eine Breite von 1 bis 5 mm, in der Regel von 2 bis 3 mm, annimmt. Wesentlich ist jedoch die Ausbildung der Rundung an der Schabkante, und die Anlagefläche kann entweder bereits bei Herstellung des Schaberelementes in einem gewissen Ausmaß ausgebildet werden oder sich auch durch entsprechende Abarbeitung im Betrieb einstellen.

Im Folgenden wird die Erfindung anhand der Zeichnung näher erläutert.
Fig. 1 zeigt schematisch einen Schnitt durch eine erfindungsgemäße Filtervorrichtung.
Fig. 2 und 3 zeigen Detailansichten des filtersiebnahen Endes eines Schaberelementes.
Fig. 4 zeigt eine perspektivische Ansicht eines Schaberelementes. Fig. 5 zeigt auf einem Träger montierte Schaberelemente, so wie diese in einer Vorrichtung zur Rezyklierung von Polymeren eingesetzt werden können.

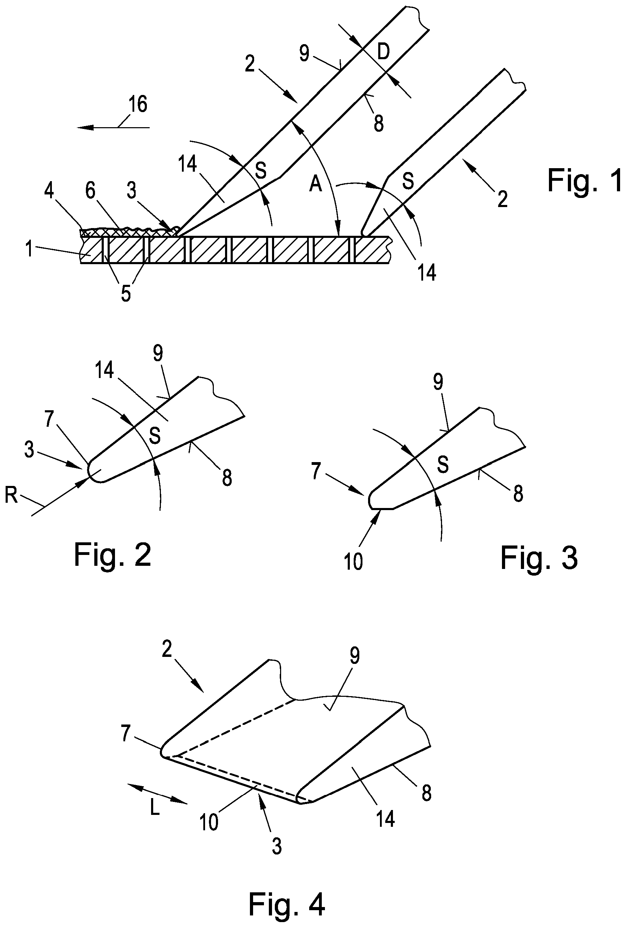

Fig. 1 zeigt eine einfache Ausführungsform einer erfindungsgemäßen Filtervorrichtung in einem schematischen Schnitt. Ein Schaberelement 2 liegt mittels einer Schabkante 3 an der Oberfläche 4 eines Filtersiebes 1 an, gleitet im Betrieb in Richtung des Pfeils 16 längs dieser Oberfläche 4 und hebt dabei auf der Oberfläche 4 aufliegende bzw. die Sieblöcher 5 des Filtersiebes 1 verschließende Verunreinigungen 6 mit einer Schabkante 3 ab. Diese Verunreinigungen werden dabei längs des Pfeils 17 bewegt und einer nicht dargestellten Austragseinrichtung zugeführt.

Das Filtersieb 1 ist zumeist aus Metall erstellt. Das Schaberelement 2 ist mit einem nicht dargestellten Träger in Position gehalten.

Das Schaberelement 2 ist plattenförmig, insbesondere in Form einer Platte mit rechteckförmigem Querschnitt, ausgebildet und besitzt eine siebnahe Rückenfläche 8 und eine siebferne Vorderfläche 9. Diese beiden Flächen 8, 9 bilden einen im siebnahen Endbereich des Schaberelements 2 liegenden Abschnitt 14 aus, der sich in Richtung auf das Filtersieb 1 verjüngt und einen Spitzenwinkel S ausbildet. In seinem siebnahen Endbereich besitzt der sich verjüngende Abschnitt 14 einen in eine Schabkante 3 auslaugenden Spitzwinkel S von 1 bis 60°, vorzugsweise 5 bis 30°, insbesondere 10 bis 25°. An dem siebnahen Endbereich ist eine Rundung 7 ausgebildet.

Es ist möglich, dass die Rückenfläche 8, wie bei einem rechts in Fig. 1 dargestellten Schaberelement 2 ersichtlich, knickfrei verläuft. Für das Abführen der Verunreinigungen 6 ist es jedoch vorzuziehen, dass die siebferne Vorderfläche 9 des Schaberelements 2 ausgehend von der Rundung 7 knickfrei zum siebfernen Ende des Schaberelements 2 hin verläuft.

In Fig. 2 ist eine Detailansicht der Schabkante 3 dargestellt. Die Schabkante 3 weist in ihrem in Bewegungsrichtung 16 voreilenden Endbereich eine Rundung 7 auf, deren Radius R weniger als 90 %, vorzugsweise weniger als 50 %, insbesondere weniger als 20 %, des maximalen Durchmessers bzw. der maximalen Öffnungsweite der Sieblöcher 5 beträgt. Die Rundung 7 kann sich über die gesamte Spitze, d.h. von der Vorderfläche 9 bis zur Rückenfläche 8, erstrecken und ermöglicht ein verbessertes Abheben der Verunreinigungen 6 von der Oberfläche 4 des Filtersiebes 1 und sogar ein Herausziehen von Verunreinigungen aus den Sieblöchern 5.

Es ist auch möglich - so wie in Fig. 3 dargestellt - das siebnahe Ende des Abschnittes 14 derart auszubilden, dass an der siebnahen Fläche 8 des Endbereiches des Abschnittes 14 an die Rundung 7 eine Anlagefläche 10 anschließt, deren Erstreckung senkrecht zum Längsverlauf L der Schabkante 3 dem 5- bis 100-fachen, vorzugsweise dem 10- bis 50-fachen des maximalen Durchmessers bzw. der maximalen Öffnungsweite der Sieblöcher 5 entspricht. Diese Anlagefläche 10, die sich an die Rundung 7 anschließt, erstreckt sich parallel zur Oberfläche 4 des Filtersiebes 1 und verbessert das Abheben der Verunreinigungen 6 bzw. verhindert aufgrund ihrer Flächen eine allzu große Veränderung des Spitzenwinkels S bzw. ein Abtragen der Rundung 7 im Betrieb, sodass die Lebensdauer des Schaberelementes 2 erhöht wird. Diese Anlagefläche 10 kann im Betrieb ausgebildet werden oder bereits vor Inbetriebnahme des Schaberelementes 2 ausgebildet werden.

Wie aus Fig. 1 ersichtlich ist, ist das Schaberelement 2 unter einem Anstellwinkel A zur Oberfläche 4 des Filtersiebes 1 geneigt angeordnet. Das Schaberelement 2 ist plattenförmig, insbesondere mit parallelen, vorzugsweise planebenen, Großflächen, d.h. einer Rückenfläche 8 und einer Vorderfläche 9, ausgebildet und in einem Anstellwinkel A von 5 bis 60°, vorzugsweise 10 bis 45°, insbesondere 20 bis 35°, zur Oberfläche 4 des Filtersiebes 1 geneigt angeordnet. Als Anstellwinkel A wird der Winkel zwischen der knickfrei verlaufenden Großfläche des Schaberelementes 2 und der Oberfläche 4 des Filtersiebes 1 angesehen. Sofern der Abschnitt 14 des Schaberelementes 2 derart ausgebildet ist, dass beide Großflächen 8, 9 mit einem Knick in den Abschnitt 14 übergehen, so wird der Anstellwinkel A zwischen der Vorderfläche 9 des Schaberelementes 2 und der Oberfläche 4 des Filtersiebes 1 gemessen. Dieser Anstellwinkel A bestimmt wesentlich die Wirkung und Standzeit des Schaberelements 2.

Fig. 4 zeigt eine perspektivische Ansicht eines erfindungsgemäßen Schaberelementes 2. Man erkennt die Vorderfläche 9, die in den Abschnitt 14 und in die Rundung 7 der Schabkante 3 übergeht. An die Rundung 7 anschließend liegt die Anlagefläche 10, die in die Rückenfläche 8 übergeht.

Die Dicke D des plattenförmigen Schaberelements 2 beträgt 0,5 bis 30 mm, vorzugsweise 1 bis 15 mm, insbesondere 2 bis 8 mm. Die Länge des Schaberelementes 2 beträgt das 5- bis 50-fache, vorzugsweise das 8- bis 30-fache, der Dicke D des Schaberelementes 2. Bei derartigen Schaberelementen 2 ist es in der Praxis in einfacher Weise möglich, eine entsprechende Verjüngung bzw. einen Abschnitt 14 auszubilden, der den gewünschten Spitzenwinkel S und ausreichende mechanische Festigkeit besitzt.

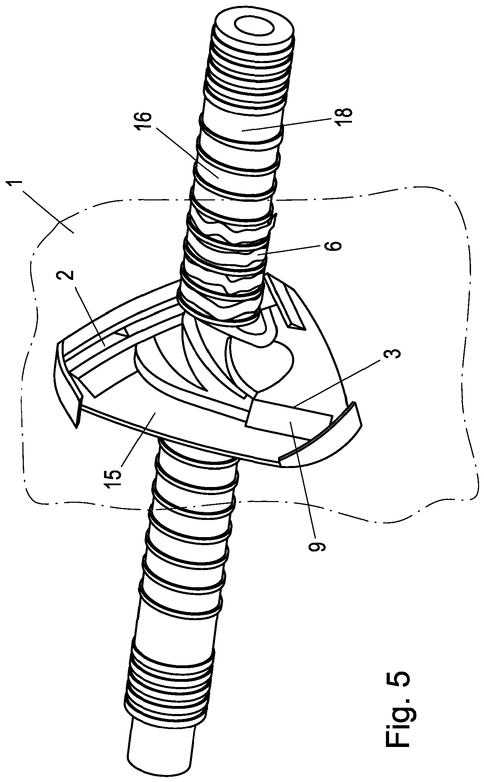

Fig. 5 zeigt ein Ausführungsbeispiels einer erfindungsgemäßen Filtervorrichtung, wobei die Lage des Filtersiebes 1 nur angedeutet ist. Das Filtersieb 1 wäre in diesem Fall feststehend und die Schaberelemente 2 mit ihren Schabkanten 3 sind auf einem Träger 15 relativ zum feststehenden Filter 7 rotierbar, welcher Träger 15 auf einer rotierbaren Welle 18 befestigt ist. Im Betrieb wird die Polymerschmelze über im Träger 15 ausgebildete Kanäle zur anströmseitigen Oberfläche 4 des Filtersiebes 1 geleitet und durch dieses durchgedrückt und abgeführt, wobei durch die rotierende Bewegung der Schaberelemente 2 die Verunreinigungen 6 vom Filtersieb 1 abgehoben und separat ausgetragen werden. Diese Verunreinigungen 6 werden, wie bereits im Zusammenhang mit Fig. 1 erläutert, längs der Vorderfläche 9 des Schaberelementes 2 abgeführt und in Richtung auf in der Welle 18 ausgebildeten Nuten 16 geleitet und über diese Nuten 16 werden die Verunreinigungen 6 mit einem gewissen Anteil der Polymerschmelze ausgetragen.

Die erfindungsgemäße Filtervorrichtung liegt in zwei funktionalen Ausführungsformen vor. Vor Inbetriebnahme kann der die Rundung 7 tragende Abschnitt 14 mit oder ohne Anlagefläche 10 ausgebildet sein. Ist der Abschnitt 14 ohne Auflagefläche 10 ausgebildet, so kann diese Anlagefläche 10 durch Inbetriebnahme ausgebildet werden. Sowohl bei einem derartigen Einlaufvorgang als auch bei Vergrößerung der Anlagefläche im fortgesetzten Betrieb wird ein effizientes Austagen von Verunreinigungen unterstützt.

Von Vorteil ist eine Ausführungsform, bei der vorgesehen ist, dass sich die Rundung 7 von der siebfilterfernen Vorderfläche 9 zumindest bis zu dem siebfilternächsten Punkt des Abschnittes 14 erstreckt, an dem gegebenenfalls die Anlagefläche 10 anschließt oder dass die die Rundung 7 von der Vorderfläche 9 zur Rückseite 8 um den Anlagepunkt des Schaberelements 2 an der Oberfläche 4 bzw. um den in Bewegungsrichtung 16 des Schaberelements 3 am weitesten vorne liegenden Punkt herum geführt ist. Diese in Fig. 2 dargestellte, sich um den Spitzenbereich des Schaberelements 3 herum erstreckende Rundung 7 verbessert das Abheben von Verunreinigungen bzw. erhöht die Standzeit. Bei Abarbeitung der der Oberfläche 4 zugewandten Rundung 7 kann sich die Anlagefläche 10 -wie in Fig. 3 dargestellt - in definierter Lage ausbilden.

In Abhängigkeit von der Art der zu reinigenden Polymerschmelze und/oder der Art und Menge der Verunreinigungen kann der Anstellwinkel für den Betrieb auch verändert bzw. eingestellt werden. Es kann vorgesehen sein, dass der Anstellwinkel des Schaberelements 3 einstellbar ist bzw. das Schaberelement 3 auf einem Träger bezüglich seines Anstellwinkels A zum Filtersieb 1 einstellbar befestigt ist.

## Patentansprüche

1. Filtervorrichtung für Polymerschmelzen mit einem Filtersieb (1), durch das die zu reinigende Polymerschmelze geführt ist, wobei die Filtervorrichtung zumindest ein Schaberelement (2) aufweist, das mit einer Schabkante (3) über die zustromseitige Oberfläche (4) des Filtersiebes (1) gleitet bzw. mit seinem der Schabkante (3) nahen Endbereich an der Oberfläche (4) anliegt und die an der Oberfläche (4) anhaftenden sowie die vor den Sieblöchern (5) liegenden Verunreinigungen (6) im Zuge seiner Bewegung über die Oberfläche (4) abhebt und/oder abstreift, wobei das Schaberelement (2) plattenförmig, insbesondere mit parallelen, vorzugsweise planebenen, Großflächen, d.h. einer Rückenfläche (8) und einer Vorderfläche (9), ausgebildet ist und einen negativen Spanwinkel besitzt und in einem Anstellwinkel (A) von 10 bis 45° zur Oberfläche (4) des Filtersiebes (1) geneigt angeordnet ist und in seinem siebnahen Endbereich einen in der Schabkante (3) endenden, sich verjüngenden und eine Rundung (7) tragenden Abschnitt (14) besitzt, wobei der Spitzenwinkel (S) zwischen der diesen Abschnitt (14) begrenzenden, siebnahen Rückenfläche (8) und siebfernen Vorderfläche (9) 1 bis 60° beträgt, **dadurch gekennzeichnet,**
- **dass** die Schabkante (3) in ihrem in Bewegungsrichtung (16) voreilenden Endbereich die Rundung (7) aufweist, deren Radius (R) weniger als 90 % des maximalen Durchmessers bzw. der maximalen Öffnungsweite der Sieblöcher (5) beträgt, und
- **dass** an der siebnahen Fläche (8) des Endbereiches des Schaberelements (2) an die Rundung (7) eine Anlagefläche (10) anschließt, deren Erstreckung senkrecht zum Längsverlauf (L) der Schabkante (3) dem 5- bis 100-fachen des maximalen Durchmessers bzw. der maximalen Öffnungsweite der Sieblöcher (5) entspricht.

2. Filtervorrichtung nach Anspruch 1, **dadurch gekennzeichnet, dass** das Schaberelement (2) in einem Anstellwinkel (A) von 20 bis 35° zur Oberfläche (4) des Filtersiebes (1) geneigt angeordnet ist.

3. Filtervorrichtung nach Anspruch 1 oder 2, **dadurch gekennzeichnet, dass** die Schabkante (3) in ihrem in Bewegungsrichtung (16) voreilenden Endbereich eine Rundung (7) aufweist, deren Radius (R) weniger als 50 %, insbesondere weniger als 20 %, des maximalen Durchmessers bzw. der maximalen Öffnungsweite der Sieblöcher (5) beträgt.

4. Filtervorrichtung nach einem der Ansprüche 1 bis 3, **dadurch gekennzeichnet, dass** an der siebnahen Fläche (8) des Endbereiches des Schaberelements (2) an die Rundung (7) eine Anlagefläche (10) anschließt, deren Erstreckung senkrecht zum Längsverlauf (L) der Schabkante (3) dem 10- bis 50-fachen des maximalen Durchmessers bzw. der maximalen Öffnungsweite der Sieblöcher (5) entspricht.

5. Filtervorrichtung nach einem der Ansprüche 1 bis 4, **dadurch gekennzeichnet, dass** das Schaberelement (2) in seinem siebnahen Endbereich einen in der Schabkante (3) endenden, sich verjüngenden und die Rundung (7) tragenden Abschnitt (14) besitzt, wobei der Spitzenwinkel (S) zwischen der diesen Abschnitt (14) begrenzenden, siebnahen Rückenfläche (8) und siebfernen Vorderfläche (9) 5 bis 30°, insbesondere 10 bis 25°, beträgt.

6. Filtervorrichtung nach einem der Ansprüche 1 bis 5, **dadurch gekennzeichnet, dass** die siebferne Vorderfläche (9) des Schaberelements (2) senkrecht zur Schabkante (3) ausgehend von der Schabkante (3) knickfrei zum siebfernen Ende des Schaberelements (2) hin verläuft.

7. Filtervorrichtung nach einem der Ansprüche 1 bis 6, **dadurch gekennzeichnet, dass** die Dicke (D) des plattenförmigen Schaberelements (2) 0,5 bis 30 mm, vorzugsweise 1 bis 15 mm, insbesondere 2 bis 8 mm, beträgt, und/oder dass die Länge des Schaberelementes (2) das 5- bis 50-fache, vorzugsweise das 8- bis 30-fache, der Dicke (D) des Schaberelementes (2) beträgt.

8. Filtervorrichtung nach einem der Ansprüche 1 bis 7, **dadurch gekennzeichnet, dass** sich die Rundung (7) von der siebfilterfernen Vorderfläche (9) zumindest bis zu dem siebfilternächsten Punkt des Abschnittes (14) erstreckt, an dem gegebenenfalls die Anlagefläche (10) anschließt oder dass die die Rundung (7) von der Vorderfläche (9) zur Rückseite (8) um den Anlagepunkt des Schaberelements (2) an der Oberfläche (4) bzw. um den in Bewegungsrichtung (16) des Schaberelements (3) am weitesten vorne liegenden Punkt herum geführt ist.

9. Filtervorrichtung nach einem der Ansprüche 1 bis 8, **dadurch gekennzeichnet, dass** der Anstellwinkel des Schaberelements (3) einstellbar ist bzw. das Schaberelement (3) auf einem Träger bezüglich seines Anstellwinkels (A) zum Filtersieb (1) einstellbar befestigt ist.

10. Filtervorrichtung nach einem der Ansprüche 1 bis 9, **dadurch gekennzeichnet, dass** der Anstellwinkel (A) zwischen der knickfrei verlaufenden Großfläche des Schaberelementes (2) und der Oberfläche (4) des Filtersiebes (1) liegt oder dass bei Ausbildung des Schaberelementes (2) derart, dass beide Großflächen (8, 9) mit einem Knick in den Abschnitt (14) übergehen, der Anstellwinkel (A) zwischen der Vorderfläche (9) des Schaberelementes (2) und der Oberfläche (4) des Filtersiebes (1) liegt.

## Claims

1. Filter device for polymer melts having a filter screen (1), through which the polymer melt to be purified is guided, wherein the filter device has at least one scraping element (2), which glides across the inflow-side surface (4) of the filter screen (1) with a scraping edge (3), or which rests on the surface (4) with its end area near the scraping edge (3), and which lifts off and/or scrapes off the contaminants (6) adhering to the surface (4) and those in front of the screen perforations (5) during its movement across the surface (4), wherein the scraping element (2) is configured in the shape of a disk, in particular with parallel, preferably planar large surfaces, i.e. a back face (8) and a front face (9), and has a negative rake angle and is arranged at an inclined pitch (A) of 10 to 45° to the surface (4) of the filter screen (1), and in its end region near the screen has a section (14) ending in the scraping edge (3), tapering and having a curvature (7), wherein the point angle (S) between the back face (8) near the screen and delimiting said section (14) and the front face (9) remote from the screen is 1 to 60°, **characterised in that**
- the scraping edge (3) in its leading end section in the direction of movement (16) has the curvature (7), the radius (R) of which is less than 90% of the maximum diameter or the maximum opening width of the screen perforations (5), and
- **in that** on the surface (8) near the screen of the end region of the scraping element (2) a contact surface (10) adjoins the curvature (7), the extension of which perpendicular to the longitudinal path (L) of the scraping edge (3) corresponds to 5-times to 100-times the maximum diameter or the maximum opening width of the screen perforations (5).

2. Filter device according to claim 1, **characterised in that** the scraping element (2) is inclined at a pitch angle (A) of 20 to 35° to the surface (4) of the filter screen (1).

3. Filter device according to claim 1 or 2, **characterised in that** the scraping edge (3) has a curvature (7), in its leading end region in the direction of movement (16), the radius (R) of which is less than 50%, in particular less than 20%, of the maximum diameter or the maximum opening width of the screen perforations (5).

4. Filter device according to any of claims 1 to 3, **characterised in that** that a contact surface (10) is connected to the curvature (7) on the surface (8) near the screen of the end region of the scraping element (2), the extension of which, perpendicular to the longitudinal path (L) of the scraping edge (3), corresponds to 10-times to 50-times the maximum diameter or the maximum opening width of the screen perforations (5).

5. Filter device according to any of claims 1 to 4, **characterised in that** the scraping element (2) in its end region near the screen has a section (14) which terminates at the scraping edge (3), is tapered and has curvature (7), wherein the point angle (S) between the back face (8) near the screen, delimiting said section (14) and the front face (9) remote from the screen is 5 to 30°, in particular 10 to 25°.

6. Filter device according to any of claims 1 to 5, **characterised in that** the front face (9) of the scraping element (2) remote from the screen, perpendicular to the scraping edge (3), runs from the scraping edge (3) in a kink-free manner to the end of the scraper element (2) remote from the screen.

7. Filter device according to any of claims 1 to 6, **characterised in that** the thickness (D) of the disk-like scraping element (2) is 0.5 to 30 mm, preferably 1 to 15 mm, in particular 2 to 8 mm, and/or the length of the scraping element (2) is 5-times to 50-times, preferably 8-times to 30-times, the thickness (D) of the scraping element (2).

8. Filter device according to any of claims 1 to 7, **characterised in that** the curvature (7) extends from the front face (9) remote from the screen filter at least to the point of the section (14) nearest the screen filter, to which the contact surface (10) is optionally connected, or that the curvature (7) is guided from the front face (9) to the back face (8) around the contact point of the scraping element (2) on the surface (4), or around the point positioned furthest to the front in the direction of movement (16) of the scraping element (3).

9. Filter device according to any of claims 1 to 8, **characterised in that** the pitch of the scraping element (3) is adjustable, or that the scraping element (3) is adjustably attached onto a carrier with regard to its pitch angle (A) to the filter screen (1).

10. Filter device according to any of claims 1 to 9, **characterised in that** the pitch angle (A) is between the kink-free large surface of the scraping element (2) and the surface (4) of the filter screen (1) or **in that** with the configuration of the scraping element (2), such that both large surfaces (8, 9) pass with a kink into the section (14), the pitch angle (A) is between the front face (9) of the scraping element (2) and the surface (4) of the filter screen (1).

## Revendications

1. Dispositif de filtration pour masses de polymère fondues avec un tamis de filtration (1) au travers duquel la masse de polymère fondue à purifier est acheminée, dans lequel le dispositif de filtration présente au moins un élément de raclage (2) qui est conduit avec un bord de raclage (3) sur la surface (4) en amont du tamis de filtration (1) ou est en contact avec sa zone d'extrémité proche du bord de raclage (3) sur la surface (4) et les impuretés (6) qui adhèrent à la surface (4) ainsi que celles qui se trouvent devant les trous de tamis (5) sont décollées et/ou enlevées dans le cadre de son mouvement sur la surface (4), dans lequel l'élément de raclage (2) a une forme de plaque, en particulier est formé avec des grandes surfaces parallèles, de préférence planes, c'est-à-dire d'une surface arrière (8) et d'une surface avant (9) et possède un angle de coupe négatif et est disposé incliné dans un angle d'attaque (A) de 10 à 45° par rapport à la surface (4) du tamis de filtration (1) et possède, dans sa zone d'extrémité proche du tamis, une section (14) se terminant dans le bord de raclage (3), se rétrécissant et portant un arrondi (7), dans lequel l'angle de pointe (S) entre la surface arrière (8) proche du tamis limitant cette section (14) et la surface avant (9) éloignée du tamis est de 1 à 60°, **caractérisé en ce que**
- le bord de raclage (3) présente, dans sa zone d'extrémité avançant dans la direction de mouvement (16), l'arrondi (7) dont le rayon (R) est inférieur à 90 % du diamètre maximal ou de la largeur d'ouverture maximale des trous de tamis (5), et
- au niveau de la surface proche du tamis (8) de la zone d'extrémité de l'élément de raclage (2) au niveau de l'arrondi (7) s'adjoint une surface d'appui (10) dont l'étendue perpendiculairement à l'évolution longitudinale (L) du bord de raclage (3) correspond à 5 à 100 fois le diamètre maximal ou la largeur d'ouverture maximale des trous de tamis (5).

2. Dispositif de filtration selon la revendication 1, **caractérisé en ce que** l'élément de raclage (2) est disposé dans un angle d'attaque (A) de 20 à 35° par rapport à la surface (4) du tamis de filtration (1).

3. Dispositif de filtration selon la revendication 1 ou 2, **caractérisé en ce que** le bord de raclage (3) présente, dans sa zone d'extrémité avançant dans la direction de mouvement (16), un arrondi (7) dont le rayon (R) est inférieur à 50 %, en particulier inférieur à 20 % du diamètre maximal ou de la largeur d'ouverture maximale des trous de tamis (5).

4. Dispositif de filtration selon l'une quelconque des revendications 1 à 3, **caractérisé en ce qu'**au niveau de la surface proche du tamis (8) de la zone d'extrémité de l'élément de raclage (2) au niveau de l'arrondi (7) s'adjoint une surface d'appui (10) dont l'étendue perpendiculairement à l'évolution longitudinale (L) du bord de raclage (3) correspond à 10 à 50 fois le diamètre maximal ou la largeur d'ouverture maximale des trous de tamis (5).

5. Dispositif de filtration selon l'une quelconque des revendications 1 à 4, **caractérisé en ce que** l'élément de raclage (2) possède, dans sa zone d'extrémité proche du tamis, une section (14) se terminant dans le bord de raclage (3), se rétrécissant et portant l'arrondi (7), dans lequel l'angle de pointe (S) entre la surface arrière (8) proche du tamis limitant cette section (14) et la surface avant (9) éloignée du tamis est de 5 à 30°, en particulier de 10 à 25°.

6. Dispositif de filtration selon l'une quelconque des revendications 1 à 5, **caractérisé en ce que** la surface avant (9) éloignée du tamis de l'élément de raclage (2) évolue perpendiculairement par rapport au bord de raclage (3) sans former de coude à partir du bord de raclage (3) par rapport à l'extrémité éloignée du tamis de l'élément de raclage (2).

7. Dispositif de filtration selon l'une quelconque des revendications 1 à 6, **caractérisé en ce que** l'épaisseur (D) de l'élément de raclage sous forme de plaque (2) est de 0,5 à 30 mm, de préférence de 1 à 15 mm, en particulier de 2 à 8 mm, et/ou **en ce que** la longueur de l'élément de raclage (2) est de 5 à 50 fois, de préférence de 8 à 30 fois l'épaisseur (D) de l'élément de raclage (2).

8. Dispositif de filtration selon l'une quelconque des revendications 1 à 7, **caractérisé en ce que** l'arrondi (7) de la surface avant (9) éloignée du filtre à tamis s'étend au moins jusqu'au point le plus proche du filtre à tamis de la section (14), au niveau de laquelle s'adjoint éventuellement la surface d'appui (10) ou **en ce que** l'arrondi (7) de la surface avant (9) est conduit par rapport au côté arrière (8) autour du point d'appui de l'élément de raclage (2) sur la surface (4) ou autour du point situé le plus à l'avant dans la direction de mouvement (16) de l'élément de raclage (3).

9. Dispositif de filtration selon l'une quelconque des revendications 1 à 8, **caractérisé en ce que** l'angle d'attaque de l'élément de raclage (3) peut être ajusté ou l'élément de raclage (3) est fixé sur un support de façon à pouvoir être ajusté concernant son angle d'attaque (A) par rapport au tamis de filtrage (1).

10. Dispositif de filtration selon l'une quelconque des revendications 1 à 9, **caractérisé en ce que** l'angle d'attaque (A) se situe entre la grande surface évoluant sans former de coude de l'élément de raclage (2) et la surface (4) du tamis de filtrage (1) ou **en ce que**, lors de la formation de l'élément de raclage (2) de telle sorte que les deux grandes surfaces (8, 9) se rejoignent en formant un coude dans la section (14), l'angle d'attaque (A) se situe entre la surface avant (9) de l'élément de raclage (2) et la surface (4) du tamis de filtrage (1).
